# EUROPÄISCHE PATENTANMELDUNG

(11) **EP 1 103 765 A2**
(43) Veröffentlichungstag der Anmeldung: **30.05.2001**
(21) Anmeldenummer: 00124791.5
(22) Anmeldetag: 14.11.2000
(51) Int. Cl.: F23N 5/24, F23N 1/08

(54) **Vorrichtung zur Überwachung der Wassertemperatur**

(30) Priorität: 24.11.1999 DE 19956426
(71) Anmelder: HONEYWELL B.V., 1101 EA Amsterdam Z.O. (NL)
(72) Erfinder: Bosscher, Eric, 7957 DH De Wijk (NL)
(74) Vertreter: Sturm, Christoph

(57) **Zusammenfassung**

Die Erfindung betrifft eine Vorrichtung zur Überwachung der Wassertemperatur, insbesondere zur Überwachung der maximal zulässigen Wassertemperatur.

Bei der erfindungsgemäßen Vorrichtung wird das Ausgangssignal mindestens eines Sensors, den einer Leitung eines Wärmetauschers angeordnet ist, einer Steuerungseinrichtung als Eingangssginal zugeführt. Ein Komparator ist derart mit der Steuerungseinrichtung verschaltet, daß einem ersten Eingang des Komparators ein erstes Referenzsignal einem zweiten Eingang des Komparators entweder das Ausgangssignal des Sensors oder ein zweites Referenzsignal zugeführt wird. Ein Ausgangssignal des Komparators dient einerseits der Ansteuerung des Brenners und wird andererseits der Steuerungseinrichtung als Eingangssignal zugeführt.

Mit der erfindungsgemäßen Vorrichtung kann auf die bei Vorrichtungen nach dem Stand der Technik verwendeten zusätzlichen Sensoren zur Überwachung der Maximaltemperatur verzichtet werden. Darüber hinaus kommt die erfindungsgemäße Vorrichtung mit einer nicht-selbstsicheren Software aus.

## Beschreibung

Die Erfindung betrifft eine Vorrichtung zur Überwachung der Wassertemperatur gemäß dem Oberbegriff des Anspruchs 1.

Die Wassertemperatur in zum Beispiel einem Wärmetauscher muß zur Bereitstellung der gewünschten Wassertemperatur fortlaufend überwacht werden. Insbesondere muß gewährleistet sein, daß die maximal zulässige Wassertemperatur nicht überschritten wird.

Zur Überwachung der maximal zulässigen Wassertemperatur ist nach dem Stand der Technik der den Wasserstrom führenden Wasserleitung zusätzlich zu den zwei Tempertursensoren, die ihre Meßwerte bzw. Ausgangsgrößen als Regelungs-Istwerte an eine Steuerungseinrichtung liefern, ein zusätzlicher mechanischer Sensor zugeordnet, der bei Überschreiten der maximal zulässigen Wassertemperatur die Gaszufuhr zu einem Gasbrenner unterbricht, um so ein weiteres Aufheizen des Wassers im Wärmetauscher unmittelbar zu vermeiden. Diese Überwachung der maximal zulässigen Wassertemperatur durch den zusätzlichen Sensor wird auch als Sicherheitsfunktion bezeichnet. Aus Kostengründen ist die Verwendung dieses zusätzlichen mechanischen Sensors zur Überwachung der maximal zulässigen Wassertemperatur und damit zur Gewährleistung der Sicherheitsfunktion nachteilig.

Zur Vermeidung des zusätzlichen mechanischen Sensors ist es bereits bekannt, die obige Sicherheitsfunktion - also die Überwachung der maximal zulässigen Wassertemperatur - als Softwarebaustein in die Steuerungseinrichtung zu integrieren. Dabei mußte jedoch bislang eine sogenannte selbstsichere Software, sogenannte Klasse C Software, eingesetzt werden. Zur Erläuterung sei angemerkt, daß eine Klasse C Software eine Sicherheitsverletzung innerhalb von 3 Sekunden detektieren muß, während eine sogenannte Klasse B Software eine Sicherheitsverletzung innerhalb von 24 Stunden detektieren muß und eine Klasse A Software gar keine Sicherheitsfunktion aufweist. Die Verwendung einer Klasse C Software zur Gewährleistung der Sicherheitsfunktion ist jedoch auch aus Kostengründen nachteilig.

Der vorliegenden Erfindung liegt also das Problem zu Grunde, eine neuartige Vorrichtung zur Überwachung der Wassertemperatur eines Wärmetauschers zu schaffen.

Dieses Problem wird durch eine Vorrichtung mit den Merkmalen des Anspruchs 1 gelöst.

Mit der erfindungsgemäßen Vorrichtung ist es möglich, einerseits auf den bei Vorrichtungen nach dem Stand der Technik üblichen, zusätzlichen mechanischen Sensor zur Überwachung der maximal zulässigen Wassertemperatur zu verzichten und gleichzeitig lediglich eine Klasse A Software in der Steuerungseinrichtung zu verwenden. Bei Verwendung einer nicht selbstsicheren Software und einer nicht selbstsicheren Hardware (bedingt durch den Verzicht auf den zusätzlichen mechanischen Sensor) wird trotzdem eine insgesamt selbstsichere Vorrichtung zur Überwachung der Wassertemperatur eines Wärmetauschers geschaffen. Diese ist sehr kostengünstig.

Weitere vorteilhafte Ausgestaltungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:

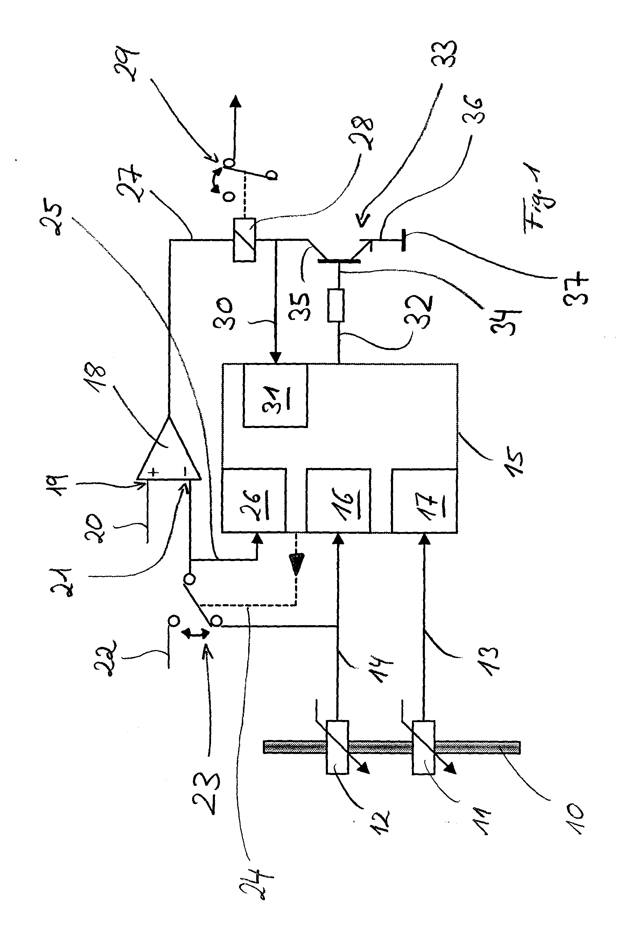

- Fig. 1: ein Blockschaltbild einer erfindungsgemäßen Vorrichtung.

Die in der Zeichnung gezeigte Vorrichtung dient der Überwachung der maximal zulässigen Wassertemperatur bei einem Wärmeaustauscher, wobei mit Hilfe der Vorrichtung bei Überschreiten der maximal zulässigen Wassertemperatur eine automatische Abschaltung eines Brenners erfolgt, der der Erhitzung des Wassers im Wärmetauscher dient.

Figur 1 zeigt schematisch eine Wasserleitung 10 eines im Detail nicht dargestellten Wärmetauschers. Der Wasserleitung 10 sind zwei Sensoren 11, 12 zugeordnet. Bei den Sensoren 11, 12 handelt es sich um Temperatursensoren, insbesondere um NTC-Sensoren.

Die Sensoren 11, 12 messen demnach die Temperatur des in der Wasserleitung 10 fließenden Wassers. Entsprechende Ausgangssignale 13, 14 werden einer Steuerungseinrichtung 15 zugeführt. Über entsprechende A/D-Wandler 16, 17 werden die Ausgangssignale 13, 14 der Sensoren 11, 12 in ein Datenformat transformiert, das von der Steuerungseinrichtung 15 weiterverarbeitet werden kann.

Zusätzlich zur Steuerungseinrichtung 15 verfügt die erfindungsgemäße Vorrichtung über einen Komparator 18. Der Komparator 18 ist als Operationsverstärker ausgebildet. Einem ersten Eingang 19 des Komparators 18 wird ein erstes Referenzsignal 20 zugeführt. Einem zweiten Eingang 21 des Komparators 19 wird entweder das Ausgangssignal 14 des Sensors 12 oder ein zweites Referenzsignal 22 zugeführt. Dies ist abhängig von der Stellung eines ersten Schalters 23. Der erste Schalter 23 ist von der Steuerungseinrichtung 15 ansteuerbar. Mit anderen Worten bestimmt die Steuerungseinrichtung 15, ob das zweite Referenzsignal 22 oder das Ausgangssignal 14 des Sensors 12 am zweiten Eingang 21 des Komparators 18 anliegt. Eine Steuerleitung 24, über die die Steuerungseinrichtung 15 die Stellung des ersten Schalters 23 bestimmt, ist in Figur 1 gestrichelt dargestellt.

Gemäß Figur 1 wird das Signal, das am zweiten Eingang 21 des Komparators 18 anliegt, der Steuerungseinrichtung 15 ebenfalls als Eingangssignal 25 zugeführt. Über einen entsprechenden A/D-Wandler 26 wird das Signal 25 wiederum in ein Datenformat konvertiert, das von der Steuerungseinrichtung 15 weiterverarbeitet werden kann.

Ein Ausgangssignal 27 des Komparators 18 wirkt über einen entsprechenden Aktuator 28 auf einen zweiten Schalter 29 ein, mit Hilfe dessen der nicht-dargestellte Gasbrenner angesteuert wird. Abhängig von der Position des zweiten Schalters 29 wird demnach dem Gasbrenner Gas zugeführt oder nicht. Voerzugsweise wird abhängig von der Position des zweiten Schalters 29 auf einen Feuerungsautomaten eingewirkt, der die Gaszufuhr zum Brenner steuert. Bei Zuführung von Gas zum Gasbrenner findet eine Verbrennung im Gasbrenner und damit eine Erhitzung des Wassers im Wärmetauscher statt.

Gemäß Figur 1 wird das Ausgangssignal 27 des Komparators 18 der Steuerungseinrichtung 15 als Eingangssignal 30 zugeführt und über einen entsprechenden A/D-Wandler 31 in ein für die Steuerungseinrichtung 15 lesbares Format gewandelt.

Ein Ausgangssignal 32 der Steuerungseinrichtung 15 wird einem Transistor 33 zugeführt, nämlich der Basis 34 des Transistors 33. Der Kollektor 35 des Transistors 33 ist mit dem Signal 30 und der Emitter 36 mit Erdpotential 37 beaufschlagt.

Im Hinblick auf die Referenzsignale 20, 22 muß noch angemerkt werden, daß es sich bei dem Referenzsignal 20 um ein Signal handelt, daß der maximal zulässigen Wassertemperatur des Wassers im Wärmetauscher entspricht. Das zweite Referenzsignal 22 verfügt über einen höheren Pegel als das Referenzsignal 20. Gemäß Figur 1 wird das erste Referenzsignal 20 dem nicht-invertierenden Eingang 19 und das zweite Referenzsignal 22 dem invertierenden Eingang 20 des Komparators 18 zugeführt.

Die Funktionsweise der erfindungsgemäßen Vorrichtung ergibt sich daraus wie folgt:

Beim Anfahren des Gasbrenners oder bei jeder neuen Wärmeanforderung wird eine Startsequenz wie folgt durchlaufen. Die Ausgangsgröße 32 der Steuerungseinrichtung 15 verfügt über einen niedrigen Pegel. Der erste Schalter 23 befindet sich in einer Position, in der das zweite Referenzsignal 22 dem zweiten Eingang 21 des Komparators 18 zugeführt wird. In diesem Fall wird das zweite Referenzsignal 22 der Steuerungseinrichtung 15 als Eingangssignal 25 zugeführt. Das Ausgangssignal 27 wird der Steuerungseinrichtung 15 als Eingangssignal 30 zugeführt. Dieses Signal sollte ebenfalls einen niedrigen Pegel aufweisen. Der zweite Schalter 29 befindet sich dann in einer geöffneten Stellung, d.h. es wird dafür gesorgt, daß dem Gasbrenner kein Gas zugeführt wird.

Darauffolgend wird von der Steuerungseinrichtung 15 der erste Schalter 23 über die Steuerleitung 24 umgelegt, d.h. er nimmt die in Figur 1 dargestellte Position ein, in der das Ausgangssignal 14 des Sensors 12 dem zweiten Eingang 21 des Komparators 18 als Eingangsgröße zugeführt wird. Die Eingangssgröße 25 der Steuerungseinrichtung 15 muß dann der Ausgangsgröße 14 des Sensors 12 entsprechen. Falls in diesem Fall der Spannungspegel geringer oder gleich der ersten Referenzspannung 20 ist, muß die Ausgangsgröße 27 des Komparators 18 und damit das Signal 30 einen hohen Pegel einnehmen. Die Werte der Eingangsgrößen 13 und 14 müßten innerhalb eines vorbestimmten Toleranzbands gleich sein. Falls alle diese Bedingungen erfüllt sind, wird die Ausgangsgröße 32 der Steuerungseinrichtung 15 auf einen hohen Pegel gelegt. Hierdurch wird der zweite Schalter 29 in die in der Figur 1 gezeigte Stellung überführt, d.h. der Schalter 29 wird vom Aktuator 28 derart geschlossen, daß dem Gasbrenner Gas zugeführt werden kann und damit eine Befeuerung des im Detail nicht dargestellten Wärmetauschers erfolgen kann. Während des normalen Betriebs werden von der Steuerungseinrichtung 15 die Ausgangsgrößen 13, 14 der Sensoren 11, 12 fortlaufend überwacht und verglichen. Falls sich zwischen beiden Ausgangsgrößen 13, 14 eine zu große Abweichung einstellt oder falls der maximal zulässige Wassertemperaturwert überschritten wird, wird die Ausgangsgröße 32 von der Steuerungseinrichtung 15 auf einen niederen Pegel gelegt. Dann wird der Aktuator 28 veranlaßt, den Schalter wiederum umzulegen, so daß dem Gasbrenner kein Gas mehr zugeführt wird.

Mit der erfindungsgemäßen Vorrichtung kann demnach auf einen zusätzlichen mechanischen Sensor, der bei Vorrichtungen nach dem Stand der Technik üblicherweise notwendig ist, verzichtet werden. Darüber hinaus kann in der Steuerungseinrichtung 15 eine sogenannte Klasse A-Software verwendet werden. Trotzdem ergibt sich ein insgesamt selbstsicheres Überwachungssystem für die zulässige Maximaltemperatur des im Wärmetauscher zu erwärmenden Wassers.

### Bezugszeichenliste:

- 10: Wasserleitung
- 11: Sensor
- 12: Sensor
- 13: Ausgangssignal
- 14: Ausgangssignal
- 15: Steuerungseinrichtung
- 16: A/D-Wandler
- 17: A/D-Wandler
- 18: Komparator
- 19: Eingang
- 20: Referenzsignal
- 21: Eingang
- 22: Referenzsignal
- 23: Schalter
- 24: Steuerleitung
- 25: Signal
- 26: A/D-Wandler
- 27: Ausgangssignal
- 28: Aktuator
- 29: Schalter
- 30: Eingangssignal
- 31: A/D-Wandler
- 32: Ausgangssignal
- 33: Transistor
- 34: Basis
- 35: Kollektor
- 36: Emitter
- 37: Erdpotential

## Patentansprüche

1. Vorrichtung zur Überwachung der Wassertemperatur, insbesondere zur Überwachung der maximal zulässigen Wassertemperatur, wobei ein Brenner für die Erhitzung des Wassers sorgt, mit folgenden Merkmalen:
a) einer das Wasser führenden Leitung (10) ist mindestens ein Sensor (11, 12) zugeordnet, wobei ein Ausgangssignal (13, 14) des oder jeden Sensors (11, 12) einer Steuerungseinrichtung (15) als Eingangssignal zugeführt wird,
b) ein Komparator (18) ist derart mit der Steuerungseinrichtung (15) verschaltet, daß einem ersten Eingang (19) des Komparators (18) ein erstes Referenzsignal (20) und einem zweiten Eingang (21) des Komparators (18) entweder das Ausgangssignal (14) des Sensors (12) oder ein zweites Referenzsignal (22) zugeführt wird,
c) ein Ausgangssignal (27) des Komparators (18) wird einerseits der Steuerungseinrichtung (15) als Eingangssignal (30) zugeführt und andererseits zur Ansteuerung des Brenners verwendet.

2. Vorrichtung nach Anspruch 1, **dadurch gekennzeichnet, daß** der das Wasser führenden Leitung (10) zwei Sensoren (11, 12) zugeordnet sind, wobei ein Ausgangssignal (14) des ersten Sensors (12) der Steuerungseinrichtung (15) als Eingangssignal und abhängig von der Stellung eines ersten Schalters (23) zusätzlich dem zweiten Eingang (21) des Komparators (18) als Eingangssignal zugeführt wird, und wobei ein Ausgangssignal (13) des zweiten Sensors (11) ausschließlich der Steuerungseinrichtung (15) als Eingangssignal zugeführt wird.

3. Vorrichtung nach Anspruch 1 oder 2, **dadurch gekennzeichnet, daß** das am zweiten Eingang (21) des Komparators (18) anliegende Signal (25) der Steuerungseinrichtung (15) als zusätzliches Eingangssignal zugeführt wird.

4. Vorrichtung nach einem oder mehreren der Ansprüche 1 bis 3, **dadurch gekennzeichnet, daß** die Steuerungseinrichtung (15) die Stellung des ersten Schalters (23) beeinflußt.

5. Vorrichtung nach einem oder mehreren der Ansprüche 1 bis 4, **dadurch gekennzeichnet, daß** das Ausgangssignal (27) des Komparators (18) auf einen zweiten Schalter (29) einwirkt und so zur Ansteuerung des Brenners verwendet wird.

6. Vorrichtung nach einem oder mehreren der Ansprüche 1 bis 5, **dadurch gekennzeichnet, daß** der erste Eingang (19) des Komparators dem nicht-invertierenden Eingang und der zweite Eingang (21) dem invertierenden Eingang des Komparators (18) entspricht, wobei der Komparator (18) als Operationsverstärker ausgebildet ist.

7. Vorrichtung nach einem oder mehreren der Ansprüche 1 bis 6, **dadurch gekennzeichnet, daß** eine Ausgangsgröße (32) der Steuerungseinrichtung (15) einem Transistor (33) zugeführt wird, nämlich der Basis (34) des Transistors (33), wobei der Kollektor (35) mit Ausgangssignal (27, 30) des Komparators (18) und der Emitter (36) mit Erdpotential (37) beaufschlagt ist.

8. Vorrichtung nach einem oder mehreren der Ansprüche 1 bis 7, **dadurch gekennzeichnet, daß** das erste Referenzsignal (20) der maximal zulässigen Wassertemperatur entspricht und das zweite Referenzsignal (22) einem höheren Wert aufweist als das erste Referenzsignal (21).
